# EUROPÄISCHE PATENTSCHRIFT

(11) **EP 4 104 713 B1**
(45) Veröffentlichungstag und Bekanntmachung des Hinweises auf die Patenterteilung: **13.08.2025**
(21) Anmeldenummer: 21180480.2
(22) Anmeldetag: 18.06.2021
(51) Int. Cl.: A47B 47/00, A47B 96/20, F16B 12/14

(54) **ANORDNUNG ZUR AUSBILDUNG EINES MODULAREN MÖBELBAUSYSTEMS**
ARRANGEMENT FOR FORMING A MODULAR FURNITURE SYSTEM
AGENCEMENT DE FORMATION D'UN SYSTÈME DE CONSTRUCTION DE MEUBLES MODULAIRES

(43) Veröffentlichungstag der Anmeldung: 21.12.2022
(73) Patentinhaber: Innverlag Lehr- und Lernsystem GmbH, 6020 Innsbruck (AT)
(72) Erfinder: Gatt, Roland, 6070 Ampass (AT)
(74) Vertreter: Schwarz & Partner Patentanwälte GmbH

(56) Entgegenhaltungen:
- WO-A2-2007/007306
- DE-A1- 102016 107 519
- FR-A5- 2 102 985

## Beschreibung

Die vorliegende Erfindung betrifft eine Anordnung zur Ausbildung eines modularen Möbelbausystems, wobei die Anordnung Modulplatten und Verbindungselemente umfasst, wobei die Modulplatten umlaufend beidseitig Fasen umfassen.

### HINTERGRUND DER ERFINDUNG

Für die Montage komplexer Möbelstücke, wie z.B. audiovisueller Mediensysteme (für Video- und Audioanlagen) sind modulare, formvariable und mehrfach verwendbare Möbelbausysteme, die sich individuell und kurzerhand den jeweiligen örtlichen Gegebenheiten sowie an den zu verbauenden Gegenstand anpassen lassen, vorteilhaft. Diese bedarfsgerechten Medienmöbel finden zum Bespiel in Seminar-, Besprechungs- oder Konferenzräumen, Schulungs- oder Kongresszentren und Veranstaltungssälen ihre Anwendung.

Im Wesentlichen stellen mehrere Regime ein System zum modularen Möbelbau mit unterschiedlicher (Form-)Variabilität, Qualität und/oder Nutzen im Sinne der vorliegenden Erfindung dar, wie beispielsweise DE 10 2013 100 481 A1, welches ein Baukastensystem für ein Möbelstück darlegt. Dieses präsentiert z.B. einen Messeaufbau mit Wandmodulen, welche zwei Randflächen mit keilförmigem Anlageprofil (Fasen), welche die Kontaktflächen bilden, und zwei ebene Randflächen aufweisen. Die Fasen verlaufen beidseitig und treffen sich an einer Kontaktlinie. Die Wandmodule weisen an den Randflächen mit Fasen Ausnehmungen auf, in welche L-förmige, T-förmige bzw. kreuzförmige Verbindungsmittel eingebracht werden können.

DE 75 29 231 U offenbart ein modulares Möbelstück wie ein Regal oder einen Schrank, welches aus plattenförmigen Einzelteilen zusammengesetzt ist. Die Einzelteile umfassen mindestens an drei Seiten beidseitig 45° geneigte Anschlagflächen (Fasen), die in eine mittige Anschlagkante übergehen. Dadurch können bis zu vier Einzelteile an einer gemeinsamen Kante unmittelbar miteinander verbunden werden und die Anschlagflächen bringen die Einzelteile sofort in die richtige Ausrichtung in den senkrechten Ebenen des Möbelstücks. Verbindungselemente werden dabei in den Bereich der Anschlagflächen verlegt und sind beim fertigen Möbelstück Großteils nicht mehr einzusehen.

Eine weitere Offenbarung, DE 26 17 614 A1, zeigt ein modulares Möbelsystem mit Tafeln oder Platten, welche im Winkel von 45° abgeschrägte Kanten aufweisen, und Verbindungselemente (Zapfen oder Stecker), die in Löcher an den Kanten der Platten eingebracht werden und die Platten verbinden. Zwischen den beiden Fasen an den Kanten der Platten ist ein flacher Abschnitt ausgebildet, in welchen die Löcher für die Verbindungsmittel eingebohrt sind. Die Verbindungselemente können einen rechteckigen Kopf umfassen, dessen Querdimensionen den flachen Abschnitten entsprechen und von welchem die Zapfen ausgehen. Die rechteckigen Köpfe liegen somit an der Außenseite des Möbelsystems und die Zapfen werden direkt in die Kanten der Tafeln oder Platten eingebracht.

DE 198 27 597 A1 zeigt ein zu DE 75 29 231 U ähnliches Regal aus zusammensetzbaren Platten, welche an den zusammengesetzten Kanten beidseitige Fasen aufweisen und welche durch Bohrungen an den Fasenflächen mittels Steckverbindungen (Stehbolzen oder Schwalbenschwanzverbindungen) formschlüssig verbunden werden.

WO 2005/087048 A1, DE 103 00 590 A1 und DE 296 08 565 U1 offenbaren ebenfalls modulare Systeme mit Fasen aufweisenden Platten, bei welchen die Verbindungsmittel an der Außenseite der Platten an den Ecken bzw. Kanten angebracht werden. Das Dokument DE102016107519A offenbart eine gattungsgemäße Anordnung.

Die meisten der oben genannten Systeme sind jedoch aus diversen Gründen nicht für ein flexibles und alsbaldiges Bereitstellen sowie wiederverwendbaren Zweck, die nach häufigem Auf- und Abbau dennoch strapazierfähig bleiben, geeignet. Als solches befassen sich mehrere Konzepte zwar mit verschiedensten Ausführungsformen von Modulsystemen mit Platten, welche beidseitige Fasen aufweisen und anhand von Verbindungsmitteln mehr oder weniger robust, zusammenfügbar sind. Sie decken insbesondere verschiedene Techniken zur Verknüpfung ab, d.h. die Verbindungsmittel, welche ein Verbinden der Platten ermöglichen, werden in den gefasten Kanten (formschlüssig) aufgenommen. Hierfür weisen die Kanten Ausnehmungen wie Schlitze (DE 10 2013 100 481 A1) oder Bohrungen (DE 26 17 614 A1, DE 198 27 597 A1) auf, in welche die Verbindungsmittel eingebracht werden können.

Dennoch können solche Systeme an den vorgesehenen Verbindungsstellen bei Belastung ausbrechen. Abgesehen davon bietet der Stand der Technik zwar einfache Geometrien, ästhetische Aspekte mit verdeckten bzw. nicht sichtbare Beschlägen, sowie eine Vielfalt an Kombinationsmöglichkeiten von Platten zur Verknüpfung, welche hauptsächlich für Möbel und Messeaufbauten konzipiert sind, löst aber bisher nicht das Problem ein für Mediensysteme taugliches Möbelbausystem in Modulbauweise bereitzustellen.

Aus eben diesen Gründen und unter Berücksichtigung der unbefriedigenden Tauglichkeit in Bezug auf praktisches Auf- und Abbauen des Modulsystems ebenso wie dessen flexible Anpassung an die Umgebungsstruktur sowie des zu verbauenden Mediensystems, bleibt die Herausforderung hoch, ein solches Regime einzuführen. Die oben beschriebenen Fortschritte liefern einerseits Modelle mit modularer Bauweise, andererseits bleiben auch Hürden in Bezug auf mehrfaches Montieren und Demontieren, die es zu überwinden gilt. Problematisch ist zudem das durchaus komplizierte Anbringen der Verbindungsmittel an den Modulplatten, da sich gefaste Modulplatten nicht auf triviale Art und Weise zusammenstecken lassen und daher bei der Montage sehr leicht Fehler passieren können. Folglich besteht im aktuellen Stand der Technik ein Bedarf an verbessertem Nutzen für Modulsysteme, welche mit ihrer Montage und ihrem Erscheinungsbild simpel sind und für bedarfsgerechte Medienmöbel einsetzbar sind.

### KURZBESCHREIBUNG DER ERFINDUNG

Die Aufgabe der vorliegenden Erfindung ist es, ein geeignetes modulares Möbelbausystem für audiovisuelle Mediensysteme (Video- und Audioanlagen) bereitzustellen, welches äußerst stabil und zudem formbeständig gegenüber häufigem Montieren und Demontieren ist.

Die oben definierte Aufgabe wird mit dem in den unabhängigen Ansprüchen definierten Gegenstand der vorliegenden Erfindung gelöst. Weitere vorteilhafte Ausführungsformen der vorliegenden Erfindung sind in den abhängigen Ansprüchen angegeben.

Erfindungsgemäß ist daher eine Anordnung gemäß Anspruch 1 vorgeschlagen.

Mit einer solchen Anordung ist die Verbindung von Modulplatten möglich, bei denen die Modulplattenebenen der jeweiligen Modulplatten in einer gemeinsamen Ebene liegen.

Erfindungsgemäß ist außerdem eine Anordnung gemäß Anspruch 4 vorgeschlagen.

Dadurch ist ein stabiler Stand der Anordnung bzw. der eben verbundenen Modulplatten auf einem Untergrund, beispielsweise auf einem Boden oder einer Bühne oder eines Spielpodests gewährleistet. Zudem ist die Anordnung dadurch äußerst belastbar, ohne dadurch sperrig oder wesentlich aufwendiger in seiner Fixierung an den Untergrund zu sein. Diese hohe Belastung ist beispielsweise bei audiovisuellen Mediensystemen mit hohem Gewicht unabdingbar.

Das Verbindungelement nach Anspruch 1 kann dadurch gekennzeichnet sein, dass das Verbindungselement vier Anlageflächen umfasst, wobei die vier Anlageflächen in zwei Reihen mit jeweils zwei Anlageflächen angeordnet sind, wobei vier Erhebungen kreuzförmig zwischen den vier Anlageflächen angeordnet sind. Dadurch lassen sich bis zu vier Modulplatten formschlüssig und auf besonders stabile Art und Weise miteinander verbinden. Die Formgebung der Erhebungen ergibt sich aus der Grundform der Fasenflächen der Modulplatten. So bilden die Erhebungen der Verbindungselemente das komplementäre Gegenstück zu den durch die Modulplatten genierten Kontaktflächen, in welche sie im Wesentlichen bündig und passgenau eingreifen. Einerseits wird hier eine verstärkte Stabilität des gesamten Möbelbausystems gewährleistet und andererseits wird eine fehlerhafte Montage vermieden.

Für eine einfache und kompakte Bauweise ist vorgesehen, dass die Fasenflächen in einem Winkel α von etwa 45° zu Modulplattenebene geneigt sind. Dadurch können die winkelig verbundenen Modulplatten in einem 90° Winkel verbunden werden und bei eben verbundenen Modulplatten ist die maximale Stabilität gewährleistet. Demzufolge ist es vorteilhaft, wenn die Erhebung mit zwei planen Kontaktflächen in einem Winkel β von 45° zur jeweiligen Anlagefläche geneigt ist.

Wenngleich die Modulplatten beispielsweise als Vielecke verbunden werden können (eine Kombination aus Fünfecken und Sechsecken oder aus Dreiecken ermöglicht zum Beispiel kuppelförmige Strukturen), sind Modulplatten, die vier Ecken umfassen und vorzugsweise rechteckig oder quadratisch ausgebildet sind, bevorzugt.

Um den Zusammenbau des Möbelsystems zu vereinfachen, können die Modulplatten an den Ecken Aussparungen zur Aufnahme der Anlageflächen der Verbindungselemente umfassen, wobei die Grundform der Aussparungen im Wesentlichen der Anlageflächen Verbindungselemente entspricht. Damit ist ein Verschieben der Verbindungselemente relativ zu den Modulplatten nicht möglich.

In einer Ausführungsvariante ist vorgesehen, dass das Verbindungselement zwei bis vier Anlageflächen aufweist. Damit kann ein einzelnes Verbindungselement z.B. im Wesentlichen quadratisch ausgebildet sein, um bis zu vier Modulplatten in einer Ebene zu verbinden.

Dabei kann das Verbindungselement vier Anlageflächen umfassen, wobei die vier Anlageflächen in zwei Reihen mit jeweils zwei Anlageflächen angeordnet sind, wobei vier Erhebungen kreuzförmig zwischen den vier Anlageflächen angeordnet sind. Dadurch ist ein Verschieben der zusammengebauten Elemente nicht möglich, da sie formschlüssig ineinandergreifen und der Anordnung eine enorme Stabilität verleihen. Zudem ist die Länge der Erhebungen zumindest im Wesentlichen gleich den Abmessungen der Anlageflächen des Verbindungselements in der entsprechenden Richtung. So sind die Verbindungselemente derart ausgerichtet, sodass deren Erhebungen komplementär in die durch die Fasenflächen der Modulplatten gebildeten Auflagefläche bzw. Kanten exakt eingreifen. Dies ist vorteilhaft, da diese im verbunden Zustand wenig bis keinen Spielraum zum Verrutschen haben.

Es besteht auch die Möglichkeit der Kombination von bis zu vier Anlageflächen, von denen jeweils zwei in einer Ebene liegen und so eine ebene Verbindung zweier Modulplatten ermöglichen und zwei um 90° dazu gedreht, die wiederum eine ebene Verbindung zweier Modulplatten ermöglichen, die allerdings um 90° zu den ersten beiden Modulplatten gedreht sind.

In einer Ausführungsform ist ein modulares Möbelbausystem, umfassend eine Anordnung nach einem der Ansprüche 1 bis 11 vorgesehen. Dieses Arrangement bringt eine Reihe von wesentlichen Vorteilen mit sich. Insbesondere die formschlüssige Verbindung der Modulplatten mit den Verbindungselementen zeichnet sich dadurch aus, dass alle Bestandteile der Anordnung derart ineinandergreifen, sodass die Gefahr des Ausbrechens einzelner Bestandteile bei Belastung bedeutend reduziert ist.

### DETAILLIERTE BESCHREIBUNG DER ERFINDUNG

Weitere Einzelheiten und Vorteile der vorliegenden Erfindung ergeben sich aus der Beschreibung und den beigefügten Figuren, die hierin aufgenommen sind. Die abgebildeten Figuren dienen zusammen mit der zugehörigen Figurenbeschreibung dazu, die Prinzipien der vorliegenden Erfindung zu erläutern und dem Fachmann die Anwendung der vorliegenden Erfindung zu ermöglichen.

Dabei zeigt:
- Fig. 1: ein aufgebautes erfindungsgemäßes modulares Möbelbausystem in perspektivischer Ansicht.
- Fig. 2a: eine einzelne Modulplatte für die Anordnung zur Ausbildung eines erfindungsgemäßen modularen Möbelbausystems in perspektivischer Ansicht.
- Fig. 2b: Darstellung zweier übereinander in einer gemeinsamen Ebene liegenden Modulplatten im Querschnitt.
- Fig. 3a - 3d: eine perspektivische Darstellung von vier verschiedenen Verbindungselementen.
- Fig. 4a: ein Ausführungsbeispiel eines Verbindungselements, insbesondere eines Fußelements, in perspektivischer Ansicht.
- Fig. 4b: Darstellung einer Erhebung der Anlageflächen von Verbindungselementen für in einer gemeinsamen Ebene liegenden Modulplatten.
- Fig. 4c: Darstellung einer Erhebung der Anlageflächen von winkligen Verbindungselementen für winklig zueinander angeordnete Modulplatten.
- Fig. 5: eine schematische Darstellung einer Anordnung von Modulplatten mit den jeweils passgenauen Verbindungselementen.

In allen Figuren sind gleiche Teile gleicher Ausführungsformen mit gleichen Bezugszeichen versehen, sofern nichts Anderes gesagt ist.

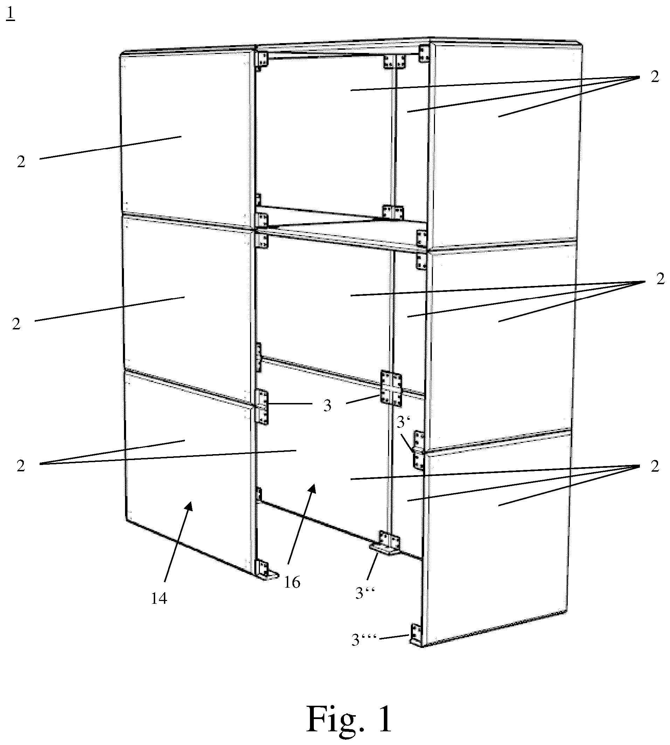

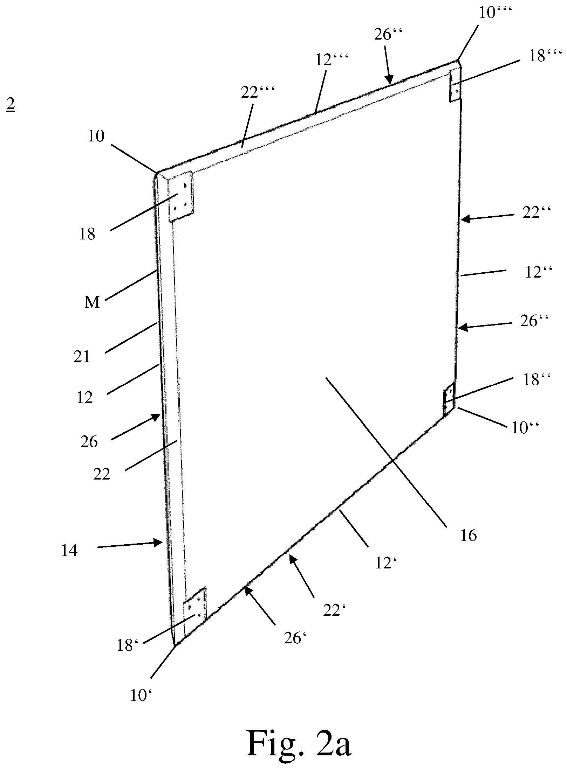

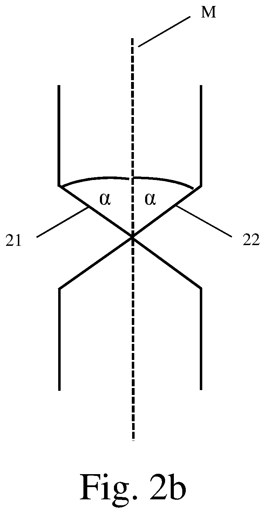

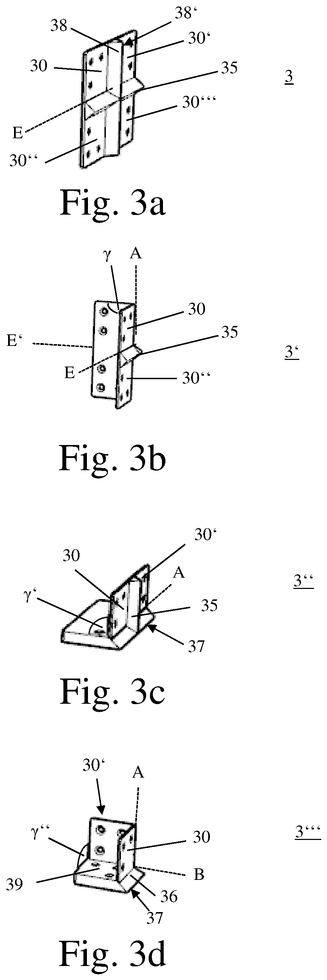

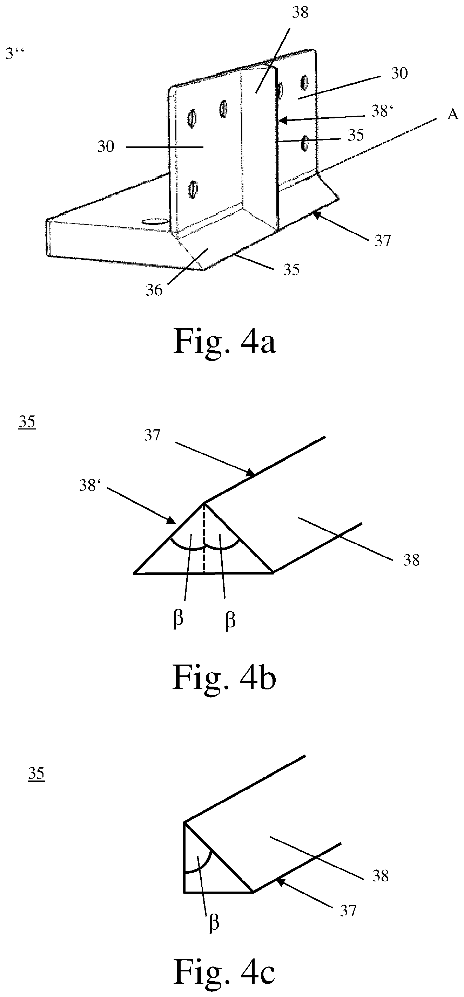

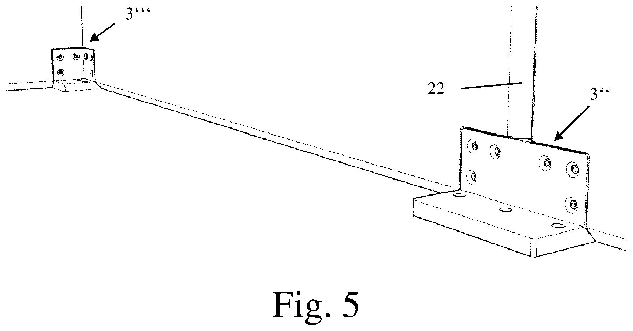

Fig. 1 zeigt ein modulares Möbelbausystem umfassend eine Anordnung **1** gemäß der Erfindung in perspektivischer Darstellung. Die Anordnung **1** umfasst plane Modulplatten **2** und vier Typen von Verbindungselementen **3, 3', 3", 3‴.** Die Modulplatte **2** und ihre Ausrichtung in einer gemeinsamen Ebene **M** sind in Fig. 2a und Fig. 2b näher dargestellt. Die einzelnen Verbindungselemente **3, 3', 3", 3‴** in den Fig. 3a bis 3d und die Verbindung zwischen Modulplatte **2** und Verbindungselementen **3, 3"** ist in den Fig. 4a und Fig. 5 besser verdeutlicht. Fig. 4b und Fig. 4c illustrieren die Erhebungen der Anlageflächen von den unterschiedlichen Verbindungselementen.

Die Modulplatten **2** sind, wie in Fig. 2a ersichtlich, quadratisch ausgebildet mit demzufolge vier Ecken **10, 10', 10", 10"'.** Die einzelnen Ecken sind durch gerade Kanten **12, 12', 12", 12‴** verbunden, wobei jede Kante **12, 12', 12", 12‴** eine plane Fasenfläche **21, 21', 21", 21‴** zur Vorderseite **14** und eine plane Fasenfläche **22, 22', 22", 22‴** zur Rückseite **16** der Modulplatte **2** aufweist. Alle Modulplatten **2** haben vorzugsweise eine einheitliche Länge, Breite und Stärke im USM Rastermaß, z.B. 750, 500, 395, 350, 250 oder 175. Die in einer Ausführung bevorzugten Stärke kann 19 mm betragen. Zudem weisen die Modulplatten **2** bevorzugt eine viereckige Form mit vier Ecken **10, 10', 10", 10‴** auf, die in einer besonders bevorzugten Ausführungsform quadratisch ist, jedoch in einer anderen bevorzugten Ausführung in Form eines Rechtecks oder Trapezes sein kann. Die Modulplatten **2** können aus Holzwerkstoff (z.B. lackierte MDF-Platten oder Furnierplatten), aber auch aus Massivholz, Kunstoffen (Vollkunststoff oder Formteilen) oder Metallblechen gefertigt werden. Die Farbe der Moduloberfläche kann für alle Modulplatten **2** dieselbe, kann aber bei Bedarf unterschiedlich sein.

Die Vorderseite **14** und die Rückseite **16** der Modulplatten **2** können beim zusammengebauten Möbelbausystem entweder als Außen- bzw. Innenwand fungieren oder aber auch als Decken-, Zwischen- oder Bodenwand dienen. Somit garantiert das Möbelbausystem eine äußerste Flexibilität in seiner Konstruktion und eine präzise Anpassungsfähigkeit in Bezug auf das zu verbauende audiovisuelle Mediensystem. So kann das Möbelbausystem medientauglich konfiguriert werden, sodass beispielsweise alle Anschlüsse des audiovisuellen Mediensystems zwar bequem zugänglich sind, aber dabei für den Betrachter nicht sichtbar sind. Auch für den Hersteller ergeben sich dadurch Vorteile, sodass in der Produktion bzw. Fertigung nur genormte Modulplatten **2** in Auftrag gegeben werden können. Dadurch können die Modulplatten **2** in einer Einheitsgröße und -form produziert und auch vertrieben werden.

Die planen Fasenflächen **21, 21', 21", 21‴; 22, 22', 22", 22‴** sind jene Flächen, durch die die Modulplatten **2** miteinander in Verbindung stehen. Sie zeichnen sich durch ein keilförmiges Profil aus, sodass zwei Fasenflächen **21, 21', 21", 21‴; 22, 22', 22", 22‴** unter einem ersten vordefinierten Winkel α von den Großflächen fort spitz aufeinander zulaufen bis sie an einer Kontaktlinie zusammentreffen. Wie in Fig. 2b beispielhaft dargestellt, ist der erste vordefinierte Winkel α im gezeigten Ausführungsbeispiel jeweils mit 45° zur Modulplattenebene **M** geneigt, bemessen, kann jedoch größer oder kleiner sein. D.h aus dieser bevorzugten Ausführungsform von einer 19 mm starken Modulplatte **2,** die im 45° Winkel gefast ist, ergibt sich eine Fasenstärke von je 9,5 mm pro Fasenfläche **21, 21', 21", 21‴; 22, 22', 22", 22‴.** Grundsätzlich ist diese Art der Fasenbildung bzw. Formgebung insbesondere in Verbindung mit den weiter unten im Detail beschriebenen Verbindungselementen **3, 3', 3", 3‴** maßgeblich, und führt dazu, dass diese mit den planen Fasenflächen **21, 21', 21", 21‴; 22, 22', 22", 22‴** in Einklang gebracht werden können. Dies ist besonders vorteilhaft, da eine intuitive wenig fehleranfällige Montage durchgeführt werden kann, mit dem Ergebnis, dass dieses ausgeklügelte Fasensystem die einzelnen Komponenten des Möbelbausystems in Einklang bringt.

Außerdem müssen die planen Fasenflächen **21, 21', 21", 21‴; 22, 22', 22", 22‴** nicht zwingend ein glattes Oberflächenprofil aufweisen, sondern können auch aus Gründen zur zusätzlichen Haftung rau bzw. aufgeraut sein.

Fig. 1 und auch Fig. 5 zeigen anhand einer exemplarischen Ausführung ein aus den Fig. 2a und Fig. 3a bis Fig. 3d dargestellten Elementen modulares Möbelbausystem in zusammengesetztem Zustand. Dabei kommt es nicht darauf an, wie viele Modulplatten **2** über- bzw. nebeneinander in einer Modulplattenebene **M** anordnet sind (siehe dazu auch Fig. 2b), um die Gesamtform des modularen Möbelbausystems zu erreichen. In dieser exemplarischen Ausführung sind die grundlegenden strukturgebenden Modulplatten **2** wie folgt zusammengefügt: die Höhe des Möbelbausystems ist dadurch bestimmt, dass drei Modulplatten **2** in einer gemeinsamen Ebene liegen, d.h. an der durch die planen Fasenflächen **21, 21', 21", 21‴; 22, 22', 22", 22‴** gebildete Kontaktlinie, aufeinander stehen. Die Breite des Möbelbausystems ist durch die einheitliche Breite einer Modulplatte **2** gekennzeichnet, sowie die Länge des Möbelbausystems durch die einheitliche Breite zweier Modulplatten **2,** die ebenso in einer gemeinsamen Ebene liegen.

So enthält Fig. 1 und Fig. 5 sowohl eben als auch (recht-)winkelig verbundene Modulplatten **2.** D.h. Modulplatten **2** lassen sich mittels ihrer planen Fasenflächen **21, 21', 21", 21‴; 22, 22', 22", 22‴** in Kontakt bringen, sodass sie in einer bevorzugten Ausführungsform entweder wie in Fig. 2b dargestellt, im 180° Winkel (in einer gemeinsamen Modulplattenebene **M**) zueinanderstehen und, um Ecken zu bilden, in einer bevorzugten Ausführungsform im 90° Winkel zueinander angeordnet sind. Wobei letzteres in einer anderen Ausführungsform, sofern keine quadratische Grundstruktur des Möbelbausystems gewünscht ist, eine Grundstruktur in Form eines Trapezes einnehmen kann, sodass der Winkel weniger bzw. mehr als 90° bildet.

Zudem kann, wie in der beispielhaften Darstellung von Fig. 1 und Fig. 5 im Inneren des Möbelbausystems eine Modulplatte **2** mit den strukturgebenden Modulplatten **2** im 90° Winkel verbunden werden, sodass die sich im Inneren des Modulbausystems befindliche Modulplatte **2** einen Zwischenboden repräsentiert, der beispielsweise dem Positionieren bzw. Abstellen von audiovisuellen Bestandteilen eines Mediensystems (Video- und Audioanlagen) dient.

Für eine ebene Verbindung zweier Modulplatten **2** sind zwei Modulplatten **2** jeweils stirnseitig an einer Kante **12, 12', 12", 12"** kontaktiert sind, wobei die zwei Modulplatten **2** mit einem ersten Verbindungselement **3** verbunden sind. Das Verbindungselement **3, 3', 3", 3‴** weist vier Anlageflächen **30, 30', 30", 30‴** auf, wobei das Verbindungselement **3, 3', 3", 3‴** im Wesentlichen quadratisch ausgebildet ist.

Mit diesem Verbindungselement **3** aus Fig. 3a sind insgesamt vier Modulplatten in einer Ebene verbindbar. Das Verbindungselement **3** enthält eine Anlagefläche **30, 30', 30", 30‴** für die erste Modulplatte **2** und eine Anlagefläche **30, 30', 30", 30‴** für die zweite Modulplatte **2,** wobei die beiden Anlageflächen **30, 30', 30", 30‴** in einer Ebene **E** liegen, wobei zwischen den beiden Anlageflächen **30, 30', 30", 30‴** eine Erhebung **35** vorgesehen ist. Die weiteren beiden Modulplatten **2** sind analog angeordnet.

Wie in Fig. 4b beispielhaft dargestellt, weist die jeweilige Erhebung **35** weist zwei plane Kontaktflächen **38, 38'** auf, die in einem zweiten Winkel β von 45° zur jeweiligen Anlagefläche **30, 30', 30", 30‴** geneigt sind. Der zweite Winkel β ist ein Komplementärwinkel zum ersten Winkel α.

Für eine (recht-)winkelige Verbindung zweier Modulplatten **2** wird eine Modulplatte **2** an einer Fasenfläche **21, 21', 21", 21‴; 22, 22', 22", 22‴** mit einer anderen Modulplatte **2** an einer Fasenfläche **21, 21', 21", 21‴; 22, 22', 22", 22‴** kontaktiert, wobei die zwei Modulplatten **2** mit einem Verbindungselement **3', 3‴,** wie in Fig. 3b und Fig. 3d exemplarisch dargestellt, verbunden werden. Das erste Verbindungselement **3, 3', 3", 3‴** weist eine Anlagefläche **30, 30', 30", 30‴** für die erste Modulplatte **2** und eine Anlagefläche **30, 30', 30", 30‴** für die zweite Modulplatte **2** auf. Die beiden Anlageflächen **30, 30', 30", 30‴** schließen einen Winkel γ um eine erste Achse **A** ein, wobei der Winkel γ dem doppelten Wert des ersten Winkels α entspricht und im vorliegenden Fall 90° beträgt. Die beiden Anlageflächen **30, 30', 30", 30‴** weisen jeweils eine Erhebung **35** auf (siehe dazu Fig. 4b), wobei die Erhebung **35** eine plane Kontaktfläche **36** aufweist, die in einem zweiten Winkel β von 45° zur jeweiligen Anlagefläche **30, 30', 30", 30‴** geneigt ist. Damit ist der zweite Winkel β ein Komplementärwinkel zum ersten Winkel α. Die Oberkante **37** der Erhebung ist zu der ersten Achse **A** um 90° gedreht.

Erkennbar ist außerdem z.B. in Fig. 2a, dass die Modulplatten **2** an den Ecken Aussparungen **18, 18', 18", 18‴** zur Aufnahme der Schenkel Anlageflächen **30, 30', 30", 30‴** der Verbindungselemente **3, 3', 3", 3‴** umfassen. Die Grundform der Aussparungen entspricht im Wesentlichen der Anlageflächen **30, 30', 30", 30‴** der Verbindungselemente **3, 3', 3", 3‴** und ist damit komplementär. Die Aussparungen **18, 18', 18", 18‴** in einer besonders bevorzugten Ausführungsform derart angeordnet, sodass sie ausgehend von der Kante der Großfläche bündig an die Kante angrenzend und in viereckiger Grundform in die Vorderseite **14** und/oder Rückseite **16** der Modulplatten **2** hineinragen.

Dies bietet, abgesehen vom passgenauen Anbringung auch den technischen Vorteil, dass die Anlageflächen **30, 30', 30", 30‴** der Verbindungselemente **3, 3', 3", 3‴** im Wesentlichen wenige Millimeter vertieft an den Modulplatten **2** angebracht werden, sodass die Modulplatten **2** nichts an Dicke einbüßen müssen und daher nichts an Stabilität und Stärke verlieren. Im Vergleich dazu, werden im aktuellen Stand der Technik die Verbindungselemente in den Ecken der Modulplatten eingebracht, sodass es zu einem Dickenverlust der Modulplatten und damit verbundenen Stabilitätsverlust kommen kann.

Zudem können, bei Bedarf, die nicht belegten Aussparungen **18, 18', 18", 18‴** anhand von Abdeckelementen verdeckt werden. Diese Eigenschaft ist vorteilhaft, da ein einheitliches und puristisches Design generiert wird und je nach Bedarf die Abdeckelemente auch wieder entfernt werden können. Zudem werden die nicht benützen Aussparungen gegenüber Schäden (während des Ab- und Aufbaus oder während des Benutzen des Möbelbausystems) geschützt. Dadurch ergibt sich eine längere Lebensdauer des gesamten Möbelbausystems und spart dem Käufer zusätzliche Kosten in Bezug auf Reparatur und/oder Neuanschaffung.

Außerdem sind in den Aussparungen **18, 18', 18", 18‴** bevorzugt Vorbohrungen bzw. Gewindebohrungen enthalten, welche in definierten und regelmäßigen Abständen zueinander angeordnet sind. In dieser bevorzugten Ausführungsform weist jede der Aussparungen **18, 18', 18", 18‴** jeweils drei Vorbohrungen auf. Diese können in einer anderen Ausführungsform zahlenmäßig reduziert oder erhöht sein, wobei dies immer im Einklang mit den Vorbohrungen der Anlageflächen **30, 30', 30", 30‴** der Verbindungselemente **3, 3', 3", 3‴** sein sollte. Die Vorbohrungen ermöglichen eine genaue Aufnahme der Verbindungselemente **3, 3', 3", 3‴** anhand von Sicherungselementen, welche jederzeit lösbar sind. Dies führt zu einer sehr einfachen Fixierung der Anlageflächen **30, 30', 30", 30‴** der Verbindungselemente **3, 3', 3", 3‴** an die Aussparungen **18, 18', 18", 18‴** der Modulplatten **2** während des Aufbaus des modularen Möbelbausystems. Denn die Sicherungselemente müssen lediglich eingesteckt und in einer vorgebohrten Gewindebohrung fixiert werden. Dies ist ganz besonders vorteilhaft, da bereits bei der Produktion bzw. Fertigung die Vorbohrungen genormt und in regelmäßigen Abständen durchgeführt werden. Somit wird bei der Montage Zeit gespart und das Hauptaugenmerk liegt auf dem Zusammensetzen der einzelnen Modulplatten **2** und dem Verbinden mittels Verbindungselementen **3, 3', 3", 3‴.** So sind bei Montage der Anordnung **1** aufgrund der bereits vorgebohrten Gewindebohrungen keine zusätzlichen Materialien sowie Geräte (z.B. Bohrer) notwendig.

Dabei können die Sicherungselemente beispielsweise Schrauben, Gewinde oder Zapfen bzw. Sicherungselemente zum Stecken sein. Dies bietet den weiteren Vorteil, dass bei Demontage die Fixierung rasch und ohne großen Aufwand wieder gelöst werden kann. Zudem bleiben die Sicherungselemente bei häufigem Montieren und Demontieren äußerst formstabil.

In einer anderen Ausführungsform können die Verbindungselemente **3, 3', 3", 3‴** an den Aussparungen **18, 18', 18", 18‴**der Modulplatten **2** mittels eines doppelseitigen Klebebands oder eines Montageklebers, beispielsweise eines Hybrid-Polymer-Klebers, Dispersions-Klebers oder Polyurethan-Klebers fixiert werden und bei Bedarf anhand eines geeigneten Entferners wieder gelöst werden.

Damit sichergestellt ist, dass die Modulplatten **2** miteinander im Wesentlichen passgenau und in einer stabilen und formbeständigen Art und Weise verbunden werden, kommen wie in Fig. 3a bis 3d dargestellt, Verbindungselemente **3, 3', 3", 3‴,** je nach Anordnung der Modulplatten **2** zueinander, zum Einsatz. Es ist leicht zu erkennen, dass die Verbindungselemente **3, 3', 3", 3‴** aller Anordnungsvarianten der Modulplatten **2** so ausgewählt sind, dass die Modulplatten **2** selbst, über ihre Art der Anordnung, sei es in einer gemeinsamen Modulplattenebene **M** liegend (siehe dazu Fig. 2b) oder winklig liegend, dem modularen Möbelbausystem eine außerordentliche Robustheit verleihen. Um vorzugsweise von der Vorderseite **14** und der Rückseite **16** des zusammengesetzten Möbelbausystems aus betrachtend eine geschlossene Oberfläche zu generieren, kommen die Verbindungselemente **3, 3', 3", 3‴**bevorzugt im Inneren des Möbelbausystems zum Einsatz, sodass sie von der Betrachtungsrichtung kaschiert sind. Je nach Anordnung der Modulplatten **2** zueinander bzw. des zu verbindenden Moduls, kommen die jeweils komplementären formschlüssigen Verbindungselemente **3, 3', 3", 3‴** zum Einsatz.

Hat das modulare Möbelbausystems in einer anderen bevorzugten Ausführungsform die Erscheinungsform eines Würfels, können beispielsweise vier Modulplatten **2** jeweils im 90° Winkel zueinander stehen und eine Modulplatte **2** die Decke ausbilden. Um sich Zugang zu diesem komplett geschlossenen System zu verschaffen, können an der Innenseite einer Modulplatte anstelle von den erfindungsgemäßen Verbindungselementen **3, 3', 3", 3‴** Scharniere für eine Tür angebracht werden.

Im Beispiel von Fig. 3a und 3b sind vier Anlageflächen **30, 30', 30", 30‴** in zwei Reihen vorgesehen. In Fig. 3a liegen diese vier Anlageflächen **30, 30', 30", 30‴** in einer Ebene, wobei vier Erhebungen **35** kreuzförmig zwischen den vier Anlageflächen **30, 30', 30", 30‴** angeordnet sind.

In Fig. 3b liegen jeweils zwei Anlageflächen in einer Ebene. Die beiden Ebenen sind um 90° zueinander geneigt mit jeweils zwei Anlageflächen **30, 30', 30", 30‴.**

Bei den Verbindungselementen **3", 3‴** von Fig. 3c und 3d sind Anlageflächen **30, 30', 30", 30‴** des Verbindungselements **3, 3', 3", 3‴** vorgesehen, die einerseits einen Winkel γ von etwa 90° um die erste Achse **A** einschließen, wobei die Erhebung **35,** wie in Fig. 4c ersichtlich, eine plane Kontaktfläche **38, 38'** aufweist, die in einem einen Winkel β von 45° zur jeweiligen Anlagefläche **30, 30', 30", 30‴** geneigt ist und eine plane Kontaktfläche **38, 38'** aufweist, die in einem einen Winkel β von 90° zur jeweiligen Anlagefläche **30, 30', 30", 30‴** gedreht ist.

Die Vorrichtung der vorliegenden Erfindung bietet also ein neuartiges Regime für ein modulares Möbelbausystem für audiovisuelle Mediensysteme (Video- und Audioanlagen). Ferner ist die Vorrichtung der vorliegenden Erfindung derart konzipiert, dass die Kombination der genormten Bauteile eine individuell anpassbare Variation in seiner Erscheinungsform zulässt. So kann sich das Möbelbausystem einfach und flexibel an jegliche Gegebenheiten anpassen. Vorteile ergeben sich aufgrund der Einheitsgröße der Modulplatten **2** und der Verbindungselemente **3, 3', 3", 3‴** in ihren definierten Ausführungsformen mit weniger Produktionsaufwand und -kosten. Somit kann in kurzer Zeit eine hohe Stückzahl gefertigt werden.

Die Ausgestaltung der Verbindungselemente **3, 3', 3", 3‴,** wie in den Fig. 3a bis 3d und Fig. 4a ersichtlich, bringt eine Reihe von Vorteilen mit sich. Die Anlageflächen **30, 30', 30", 30‴** der Verbindungselemente **3, 3', 3", 3‴** sind in die Aussparungen **18, 18', 18", 18‴** der Modulplatten **2** eingesetzt und deren Erhebungen **35** sind komplementär in die durch die planen Fasenflächen **21, 21', 21", 21‴; 22, 22', 22", 22‴** der Modulplatten **2** gebildeten Kanten. Dies verleiht dem Möbelbausystem eine außerordentliche Festigkeit und Stabilität, und kann die Gefahr eines Ausbrechens der Modulplatten **2** unter Belastung erheblich reduzieren.

Gleichzeitig wird zwischen der Form der Verbindungselemente **3, 3', 3", 3‴** und den Aussparungen **18, 18', 18", 18‴** der Modulplatten **2** eine Synergie geschaffen, sodass die beiden Strukturen ineinander verschmelzen, sodass eine ebene, stufenlose Materialoberfläche beibehalten wird. Dies bietet einerseits bei den angebrachten Verbindungselementen **3, 3', 3", 3‴** wenig Spiel zum Verrutschen und andererseits gibt es beim Zwischenboden keine Unebenheiten. Ein wesentlicher Vorteil liegt dabei in der exakten Positionierung von audiovisuellen Mediensystemen.

## Patentansprüche

1. Anordnung (1), umfassend
mindestens zwei Modulplatten (2), wobei die Modulplatten (2) wenigstens drei Ecken (10, 10', 10", 10‴) umfassen, welche durch gerade Kanten (12, 12', 12", 12") verbunden sind, wobei jede Kante (12, 12', 12", 12") eine plane Fasenfläche (21, 21', 21", 21‴) zu einer Vorderseite (14) und eine plane Fasenfläche (22, 22', 22", 22‴) zu einer Rückseite (16) der Modulplatte (2) aufweist, wobei die Fasenflächen (21, 21', 21", 21‴; 22, 22', 22", 22‴) jeweils in einem ersten Winkel α zur Modulplattenebene (M) geneigt sind, und
zumindest ein Verbindungselement (3, 3', 3", 3‴) zur ebenen Verbindung zweier Modulplatten (2),
wobei für eine ebene Verbindung zweier Modulplatten (2) eine erste Modulplatte (2) stirnseitig an einer Kante (12, 12', 12", 12") mit einer zweiten Modulplatte (2) stirnseitig an einer Kante (12, 12', 12", 12") kontaktiert ist, wobei die zwei Modulplatten (2) mit dem Verbindungselement (3, 3', 3", 3‴) verbindbar sind, wobei das Verbindungselement (3, 3', 3", 3‴) dazu eingerichtet ist, die zwei Modulplatten (2) an deren Rückseiten (16) zu verbinden,
wobei das Verbindungselement (3, 3', 3", 3‴) eine Anlagefläche (30, 30', 30", 30‴) für die Rückseite (16) der ersten Modulplatte (2) und eine Anlagefläche (30, 30', 30", 30‴) für die Rückseite (16) der zweiten Modulplatte (2) aufweist, wobei die beiden Anlageflächen (30, 30', 30", 30‴) in einer Ebene (E) liegen, wobei zwischen den beiden Anlageflächen (30, 30', 30", 30‴) eine Erhebung (35) vorgesehen ist, wobei die Erhebung (35) eine Oberkante (37) und zwei plane Kontaktflächen (38, 38') aufweist, die in einem zweiten Winkel β zur jeweiligen Anlagefläche (30, 30', 30", 30‴) geneigt sind, wobei der zweite Winkel β ein Komplementärwinkel zum ersten Winkel α ist, wobei die zwei planen Kontaktflächen (38, 38') Fasenflächen sind.

2. Anordnung (3, 3', 3", 3‴) nach Anspruch 1,
wobei für eine winkelige Verbindung zweier Modulplatten (2) eine erste Modulplatte (2) an einer Fasenfläche mit einer zweiten Modulplatte (2) an einer Fasenfläche kontaktiert ist, wobei die zwei Modulplatten (2) mit dem Verbindungselement (3, 3', 3", 3‴) verbindbar sind, wobei das Verbindungselement (3, 3', 3", 3‴) dazu eingerichtet ist, die zwei Modulplatten (2) an deren Rückseiten (16) zu verbinden,
wobei das Verbindungselement (3, 3', 3", 3‴) vier Anlageflächen (30, 30', 30", 30‴) für die Rückseiten (16) von vier Modulplatten (2) aufweist,
wobei jeweils zwei Anlageflächen in einer ersten Ebene (E) liegen und jeweils zwei Anlageflächen in einer zweiten Ebene (E') liegen, wobei die erste Ebene (E) mit der zweiten Ebene (E') einen Winkel γ um eine erste Achse (A) einschließt, wobei der Winkel γ dem doppelten Wert des ersten Winkels α entspricht,
wobei jeweils zwischen den in der ersten Ebene (E) bzw. zweiten Ebene (E') liegenden Anlageflächen (30, 30', 30", 30‴) eine Erhebung (35) vorgesehen ist, wobei die Erhebung (35) eine Oberkante (37) und zwei plane Kontaktflächen (38, 38') aufweist, die in einem zweiten Winkel β zur jeweiligen Anlagefläche (30, 30', 30", 30‴) geneigt sind, wobei der zweite Winkel β ein Komplementärwinkel zum ersten Winkel α ist, wobei die zwei planen Kontaktflächen (38, 38') Fasenflächen sind.

3. Anordnung (3, 3', 3", 3‴) nach Anspruch 1,
wobei das Verbindungselement (3, 3', 3", 3‴) eine Anlagefläche (30, 30', 30", 30‴) für die Rückseite (16) der ersten Modulplatte (2) und eine Anlagefläche (30, 30', 30", 30‴) für die Rückseite (16) der zweiten Modulplatte (2) und ein Fußelement (39) aufweist, wobei die beiden Anlageflächen (30, 30', 30", 30‴) in einer Ebene (E) liegen, wobei die beiden Anlageflächen zum Fußelement einen Winkel γ' um die erste Achse (A) bilden,
wobei zwischen den beiden Anlageflächen (30, 30', 30", 30‴) eine Erhebung (35) vorgesehen ist, wobei die Erhebung (35) eine Oberkante (37) und zwei plane Kontaktflächen (38, 38') aufweist, die in einem zweiten Winkel β zur jeweiligen Anlagefläche (30, 30', 30", 30‴) geneigt sind, wobei der zweite Winkel β ein Komplementärwinkel zum ersten Winkel α ist, wobei die zwei planen Kontaktflächen (38, 38') Fasenflächen sind,
wobei das Fußelement (39) eine Erhebung (35) aufweist, wobei die Erhebung (35) eine Oberkante (37) und eine plane Kontaktfläche (36) aufweist, die in einem zweiten Winkel β einem Untergrund zugeneigt ist, wobei der zweite Winkel β ein Komplementärwinkel zum ersten Winkel α ist und wobei die Oberkante (37) der Erhebung zu der ersten Achse (A) parallel ist, wobei die plane Kontaktfläche (36) eine Fasenfläche ist.

4. Anordnung (1), umfassend
mindestens zwei Modulplatten (2), wobei die Modulplatten (2) wenigstens drei Ecken (10, 10', 10", 10‴) umfassen, welche durch gerade Kanten (12, 12', 12", 12") verbunden sind, wobei jede Kante (12, 12', 12", 12") eine plane Fasenfläche (21, 21', 21", 21‴) zu einer Vorderseite (14) und eine plane Fasenfläche (22, 22', 22", 22‴) zu einer Rückseite (16) der Modulplatte (2) aufweist, wobei die Fasenflächen (21, 21', 21", 21"'; 22, 22', 22", 22‴) jeweils in einem ersten Winkel α zu Modulplattenebene (M) geneigt sind, und
zumindest ein Verbindungselement (3, 3', 3", 3‴) zur ebenen Verbindung zweier Modulplatten (2),
wobei für eine winkelige Verbindung zweier Modulplatten (2) eine erste Modulplatte (2) an einer Fasenfläche mit einer zweiten Modulplatte (2) an einer Fasenfläche kontaktiert ist, wobei die zwei Modulplatten (2) mit dem Verbindungselement (3, 3', 3", 3‴) verbindbar sind, wobei das Verbindungselement (3, 3', 3", 3‴) dazu eingerichtet ist, die zwei Modulplatten (2) an deren Rückseiten (16) zu verbinden,
wobei das Verbindungselement (3, 3', 3", 3‴) eine Anlagefläche (30, 30', 30", 30‴) für die Rückseite (16) der ersten Modulplatte (2) und eine Anlagefläche (30, 30', 30", 30‴) für die Rückseite (16) der zweiten Modulplatte (2) und ein Fußelement (39) aufweist, wobei die beiden Anlageflächen (30, 30', 30", 30‴) einen Winkel γ um die erste Achse (A) einschließen,
wobei der Winkel γ dem doppelten Wert des ersten Winkels α entspricht, wobei das Fußelement (39) zu den beiden Anlageflächen (30, 30', 30", 30‴) einen Winkel γ" um eine zweite Achse (B) einschließen, wobei der Winkel γ" dem doppelten Wert des ersten Winkels α entspricht,
wobei das Fußelement (39) eine Erhebung (35) aufweist, wobei die Erhebung (35) eine Oberkante (37) und eine plane Kontaktfläche (36) aufweist, die in einem zweiten Winkel β einem Untergrund zugeneigt ist, wobei der zweite Winkel β ein Komplementärwinkel zum ersten Winkel α ist und wobei die Oberkante (37) der Erhebung zu der ersten Achse (A) um 90° gedreht ist, wobei die plane Kontaktfläche (36) eine Fasenfläche ist.

5. Anordnung (3, 3', 3", 3‴) nach einem der Ansprüche 1 bis 4, **dadurch gekennzeichnet, dass** die Erhebung (35) mit zwei planen Kontaktflächen (38, 38') einen Winkel β von 45° zur jeweiligen Anlagefläche (30, 30', 30", 30‴) geneigt ist.

6. Anordnung (3, 3', 3", 3‴) nach einem der Ansprüche 1 bis 5, **dadurch gekennzeichnet, dass** das Verbindungselement (3, 3', 3", 3‴) zwei bis vier Anlageflächen (30, 30', 30", 30‴) aufweist.

7. Anordnung (3, 3', 3", 3‴) nach einem der Ansprüche 1 bis 6, **dadurch gekennzeichnet, dass** die Anlageflächen (30, 30', 30", 30‴) im Wesentlichen quadratisch ausgebildet sind.

8. Anordnung (3, 3', 3", 3‴) nach Anspruch 1, **dadurch gekennzeichnet, dass** das Verbindungselement (3, 3', 3", 3‴) vier Anlageflächen (30, 30', 30", 30‴) umfasst, wobei die vier Anlageflächen (30, 30', 30", 30‴) in zwei Reihen mit jeweils zwei Anlageflächen (30, 30', 30", 30‴) angeordnet sind, wobei vier Erhebungen (35) kreuzförmig zwischen den vier Anlageflächen (30, 30', 30", 30‴) angeordnet sind.

9. Anordnung (1) nach einem der Ansprüche 1 bis 8, **dadurch gekennzeichnet, dass** die Fasenflächen (21, 21', 21", 21‴; 22, 22', 22", 22‴) in einem Winkel α von etwa 45° zu Modulplattenebene (M) geneigt sind.

10. Anordnung (1) nach einem der Ansprüche 1 bis 9, **dadurch gekennzeichnet, dass** die Modulplatten (2) vier Ecken (10, 10', 10", 10‴) umfassen, und vorzugsweise rechteckig oder quadratisch ausgebildet sind.

11. Anordnung (1) nach einem der Ansprüche 1 bis 10, **dadurch gekennzeichnet, dass** die Modulplatten (2) an den Ecken Aussparungen (18, 18', 18", 18‴) zur Aufnahme der Schenkel Anlageflächen (30, 30', 30", 30‴) der Verbindungselemente (3, 3', 3", 3‴) umfassen, wobei die Grundform der Aussparungen im Wesentlichen der Anlageflächen (30, 30', 30", 30‴) der Verbindungselemente (3, 3', 3", 3‴) entspricht.

12. Modulares Möbelbausystem umfassend eine Anordnung (1) nach einem der Ansprüche 1 bis 11.

## Claims

1. An arrangement (1) comprising
at least two module plates (2), wherein the module plates (2) comprise at least three corners (10, 10', 10", 10"') which are connected by straight edges (12, 12', 12", 12"), wherein each edge (12, 12', 12", 12") has a flat bevelled surface (21, 21', 21", 21"') to a front side (14) and a flat bevelled surface (22, 22', 22", 22"') to a rear side (16) of the module plate (2), wherein the bevelled surfaces (21, 21', 21", 21"'; 22, 22', 22", 22"') are each inclined at a first angle α to the module plate plane (M), and
at least one connecting element (3, 3', 3", 3"') for the planar connection of two module plates (2),
wherein for a plane connection of two module plates (2), a first module plate (2) is contacted on the end face at an edge (12, 12', 12", 12") with a second module plate (2) on the end face at an edge (12, 12', 12", 12"), wherein the two module plates (2) can be connected to the connecting element (3, 3', 3", 3‴), wherein the connecting element (3, 3', 3", 3"') is designed to connect the two module plates (2) at their rear sides (16),
wherein the connecting element (3, 3', 3", 3"') has a contact surface (30, 30', 30", 30"') for the rear side (16) of the first module plate (2) and a contact surface (30, 30', 30", 30"') for the rear side (16) of the second module plate (2), wherein the two contact surfaces (30, 30', 30", 30"') lie in one plane (E), wherein between the two contact surfaces (30, 30', 30", 30"') an elevation (35) being provided, the elevation (35) having an upper edge (37) and two flat contact surfaces (38, 38') which are inclined at a second angle β to the respective contact surface (30, 30', 30", 30‴), the second angle β being a complementary angle to the first angle α, the two flat contact surfaces (38, 38') being bevelled surfaces.

2. Arrangement (3, 3', 3", 3"') according to claim 1,
wherein, for an angular connection of two module plates (2), a first module plate (2) is contacted at a bevelled surface with a second module plate (2) at a bevelled surface, wherein the two module plates (2) can be connected to the connecting element (3, 3', 3", 3‴), wherein the connecting element (3, 3', 3", 3"') is arranged to connect the two module plates (2) at their rear sides (16),
wherein the connecting element (3, 3', 3", 3"') has four contact surfaces (30, 30', 30", 30‴) for the rear sides (16) of four module plates (2),
wherein two contact surfaces lie in a first plane (E) and two contact surfaces lie in a second plane (E'), wherein the first plane (E) forms an angle γ with the second plane (E') about a first axis (A), wherein the angle γ corresponds to twice the value of the first angle α,
wherein an elevation (35) is provided between the contact surfaces (30, 30', 30", 30"') lying in the first plane (E) and second plane (E'), respectively, wherein the elevation (35) has an upper edge (37) and two plane contact surfaces (38, 38') which are inclined at a second angle β to the respective contact surface (30, 30', 30", 30‴), wherein the second angle β is a complementary angle to the first angle α, wherein the two plane contact surfaces (38, 38') are bevelled surfaces.

3. Arrangement (3, 3', 3", 3"') according to claim 1,
wherein the connecting element (3, 3', 3", 3"') has a contact surface (30, 30', 30", 30"') for the rear side (16) of the first module plate (2) and a contact surface (30, 30', 30", 30"') for the rear side (16) of the second module plate (2) and a base element (39), wherein the two contact surfaces (30, 30', 30", 30"') lie in a plane (E), wherein the two contact surfaces form an angle γ' to the base element about the first axis (A),
wherein an elevation (35) is provided between the two contact surfaces (30, 30', 30", 30‴), wherein the elevation (35) has an upper edge (37) and two flat contact surfaces (38, 38') which are inclined at a second angle β to the respective contact surface (30, 30', 30", 30‴), wherein the second angle β is a complementary angle to the first angle α, wherein the two flat contact surfaces (38, 38') are bevelled surfaces,
wherein the base element (39) has an elevation (35), wherein the elevation (35) has an upper edge (37) and a plane contact surface (36) which is inclined at a second angle β towards a base, wherein the second angle β is a complementary angle to the first angle α and wherein the upper edge (37) of the elevation is parallel to the first axis (A), wherein the plane contact surface (36) is a bevelled surface.

4. Arrangement (1) comprising
at least two module plates (2), wherein the module plates (2) comprise at least three corners (10, 10', 10", 10"') which are connected by straight edges (12, 12', 12", 12"), wherein each edge (12, 12', 12", 12") has a flat bevelled surface (21, 21', 21", 21"') to a front side (14) and a flat bevelled surface (22, 22', 22", 22"') to a rear side (16) of the module plate (2), wherein the bevelled surfaces (21, 21', 21", 21"'; 22, 22', 22", 22‴) are each inclined at a first angle α to the module plate plane (M), and
at least one connecting element (3, 3', 3", 3"') for the planar connection of two module plates (2),
wherein, for an angular connection of two module plates (2), a first module plate (2) is contacted at a bevelled surface with a second module plate (2) at a bevelled surface, wherein the two module plates (2) can be connected to the connecting element (3, 3', 3", 3‴), wherein the connecting element (3, 3', 3", 3"') is arranged to connect the two module plates (2) at their rear sides (16),
wherein the connecting element (3, 3', 3", 3"') has a contact surface (30, 30', 30", 30"') for the rear side (16) of the first module plate (2) and a contact surface (30, 30', 30", 30"') for the rear side (16) of the second module plate (2) and a base element (39), wherein the two contact surfaces (30, 30', 30", 30"') enclosing an angle γ about the first axis (A), wherein the angle γ corresponds to twice the value of the first angle α, wherein the base element (39) encloses an angle γ" about a second axis (B) relative to the two contact surfaces (30, 30', 30", 30‴), wherein the angle γ" corresponds to twice the value of the first angle α,
wherein the base element (39) has an elevation(35), wherein the elevation (35) has an upper edge (37) and a plane contact surface (36) which is inclined towards a base at a second angle β, wherein the second angle β is a complementary angle to the first angle α and wherein the upper edge (37) of the elevation is rotated by 90° to the first axis (A), wherein the plane contact surface (36) is a bevelled surface.

5. Arrangement (3, 3', 3", 3"') according to one of claims 1 to 4, **characterised in that** the elevation (35) with two planar contact surfaces (38, 38') is inclined at an angle β of 45° to the respective contact surface (30, 30', 30", 30"').

6. Arrangement (3, 3', 3", 3"') according to one of claims 1 to 5, **characterised in that** the connecting element (3, 3', 3", 3"') has two to four contact surfaces (30, 30', 30", 30‴).

7. Arrangement (3, 3', 3", 3"') according to one of claims 1 to 6, **characterised in that** the contact surfaces (30, 30', 30", 30"') are essentially square.

8. Arrangement (3, 3', 3", 3"') according to claim 1, **characterised in that** the connecting element (3, 3', 3", 3"') comprises four contact surfaces (30, 30', 30", 30‴), wherein the four contact surfaces (30, 30', 30", 30"') are arranged in two rows, each with two contact surfaces (30, 30', 30", 30‴), wherein four elevations (35) are arranged in a cross shape between the four contact surfaces (30, 30', 30", 30‴).

9. Arrangement (1) according to one of claims 1 to 8, **characterised in that** the bevelled surfaces (21, 21', 21", 21"'; 22, 22', 22", 22"') are inclined at an angle α of approximately 45° to the module plate plane (M).

10. Arrangement (1) according to one of claims 1 to 9, **characterised in that** the module plates (2) comprise four corners (10, 10', 10", 10"') and are preferably rectangular or square in shape.

11. Arrangement (1) according to one of claims 1 to 10, **characterised in that** the module plates (2) comprise recesses (18, 18', 18", 18"') at the corners for receiving the contact surfaces (30, 30', 30", 30"') of the connecting elements (3, 3', 3", 3‴), wherein the basic shape of the recesses essentially corresponds to the contact surfaces (30, 30', 30", 30"') of the connecting elements (3, 3', 3", 3‴).

12. Modular furniture system comprising an arrangement (1) according to any one of claims 1 to 11.

## Revendications

1. Assemblage (1) comprenant
au moins deux panneaux modulaires (2), les panneaux modulaires (2) comprenant au moins trois coins (10, 10', 10", 10'") reliés par des bords droits (12, 12', 12", 12"), chaque bord (12, 12', 12", 12") comportant une surface chanfreinée plane (21, 21', 21", 21'") par rapport à une face avant (14) et une surface chanfreinée plane (22, 22', 22", 22‴) par rapport à une face arrière (16) du panneau modulaire (2), les surfaces chanfreinées (21, 21', 21", 21'"; 22, 22', 22", 22‴) étant chacune inclinées selon un premier angle α par rapport au plan du panneau modulaire (M), et
au moins un élément de connexion (3, 3', 3", 3'") pour la connexion à plat de deux panneaux de module (2),
dans lequel, pour une connexion à plat de deux panneaux modulaires (2), un premier panneau modulaire (2) est en contact, sur le côté frontal sur un bord (12, 12', 12", 12"), avec un deuxième panneau modulaire (2) sur le côté frontal sur un bord (12, 12', 12", 12"), les deux panneaux modulaires (2) étant connectable avec l'élément de connexion (3, 3', 3", 3'"), l'élément de connexion (3, 3', 3", 3'") étant conçu pour connecter les deux panneaux modulaires (2) sur leurs faces arrière (16),
dans lequel l'élément de connexion (3, 3', 3", 3'") comporte une surface d'appui (30, 30', 30", 30'") pour la face arrière (16) du premier panneau modulaire (2) et une surface d'appui (30, 30', 30", 30‴) pour la face arrière (16) du deuxième panneau modulaire (2), les deux surfaces d'appui (30, 30', 30", 30'") étant situées dans un plan (E), une saillie (35) étant prévue entre les deux surfaces d'appui (30, 30', 30", 30‴), la saillie (35) comportant un bord supérieur (37) et deux surfaces de contact planes (38, 38') inclinées selon un deuxième angle β par rapport à la surface d'appui respective (30, 30', 30", 30‴), le deuxième angle β étant un angle complémentaire par rapport au premier angle α, les deux surfaces de contact planes (38, 38') étant des surfaces chanfreinées.

2. Assemblage (3, 3', 3", 3‴) selon la revendication 1,
dans lequel, pour une connexion angulaire de deux panneaux modulaires (2), un premier panneau modulaire (2) sur une surface chanfreinée est en contact avec un deuxième panneau modulaire (2) sur une surface chanfreinée, les deux panneaux modulaires (2) étant connectable avec l'élément de connexion (3, 3', 3", 3'"), l'élément de connexion (3, 3', 3", 3'") étant conçu pour connecter les deux panneaux modulaires (2) sur leurs faces arrière (16),
dans lequel l'élément de connexion (3, 3', 3", 3'") comporte quatre surfaces d'appui (30, 30', 30", 30'") pour les faces arrière (16) de quatre panneaux modulaires (2),
dans lequel deux surfaces d'appui sont situées chacune dans un premier plan (E) et deux surfaces d'appui sont situées chacune dans dans un deuxième plan (E'), le premier plan (E) décrivant un angle γ avec le deuxième plan (E') autour d'un premier axe (A), l'angle γ correspondant au double de la valeur du premier angle α,
dans lequel une saillie (35) est prévue entre les surfaces d'appui (30, 30', 30", 30'") situées respectivement dans le premier plan (E) et dans le deuxième plan (E'), la saillie (35) comportant un bord supérieur (37) et deux surfaces de contact planes (38, 38') inclinées selon un deuxième angle β par rapport à la surface d'appui respective (30, 30', 30", 30'"), le deuxième angle β étant un angle complémentaire par rapport au premier angle α, les deux surfaces de contact planes (38, 38') étant des surfaces chanfreinées.

3. Assemblage (3, 3', 3", 3'") selon la revendication 1,
dans lequel l'élément de connexion (3, 3', 3", 3'") comporte une surface d'appui (30, 30', 30", 30'") pour la face arrière (16) du premier panneau modulaire (2) et une surface d'appui (30, 30', 30", 30'") pour la face arrière (16) du deuxième panneau modulaire (2) et un élément de pied (39), les deux surfaces d'appui (30, 30', 30", 30‴) étant situées dans un plan (E), les deux surfaces d'appui formant un angle γ' par rapport à l'élément de pied autour du premier axe (A),
dans lequel une saillie (35) est prévue entre les deux surfaces d'appui (30, 30', 30", 30‴), la saillie (35) comportant un bord supérieur (37) et deux surfaces de contact planes (38, 38') inclinées selon un deuxième angle β par rapport à la surface d'appui respective (30, 30', 30", 30‴), le deuxième angle β étant un angle complémentaire par rapport au premier angle α, les deux surfaces de contact planes (38, 38') étant des surfaces chanfreinées,
dans lequel l'élément de pied (39) comporte une saillie (35), la saillie (35) comportant un bord supérieur (37) et une surface de contact plane (36) inclinée vers un substrat selon un deuxième angle β, le deuxième angle β étant un angle complémentaire par rapport au premier angle α et le bord supérieur (37) de la saillie étant parallèle au premier axe (A), la surface de contact plane (36) étant une surface chanfreinée.

4. Assemblage (1) comprenant
au moins deux panneaux modulaires (2), les panneaux modulaires (2) comprenant au moins trois coins (10, 10', 10", 10'") reliés par des bords droits (12, 12', 12", 12"), chaque bord (12, 12', 12", 12") comportant une surface chanfreinée plane (21, 21', 21", 21'") par rapport à une face avant (14) et une surface chanfreinée plane (22, 22', 22", 22‴) par rapport à une face arrière (16) du panneau modulaire (2), les surfaces chanfreinées (21, 21', 21", 21‴; 22, 22', 22", 22‴) étant chacune inclinées selon un premier angle α par rapport au plan du panneau modulaire (M), et
au moins un élément de connexion (3, 3', 3", 3'") pour la connexion à plat de deux panneaux de module (2),
dans lequel, pour une connexion angulaire de deux panneaux modulaires (2), un premier panneau modulaire (2) sur une surface chanfreinée est en contact avec un deuxième panneau modulaire (2) sur une surface chanfreinée, les deux panneaux modulaires (2) étant connectable avec l'élément de connexion (3, 3', 3", 3'"), l'élément de connexion (3, 3', 3", 3'") étant conçu pour connecter les deux panneaux modulaires (2) sur leurs faces arrière (16),
dans lequel l'élément de connexion (3, 3', 3", 3'") comporte une surface d'appui (30, 30', 30", 30'") pour la face arrière (16) du premier panneau modulaire (2) et une surface d'appui (30, 30', 30", 30'") pour la face arrière (16) du deuxième panneau modulaire (2) et un élément de pied (39), les deux surfaces d'appui (30, 30', 30", 30'") décrivant un angle γ autour du premier axe (A), l'angle γ correspondant au double de la valeur du premier angle α, l'élément de pied (39) décrivant un angle γ" par rapport aux deux surfaces d'appui (30, 30', 30", 30'") autour d'un deuxième axe (B), l'angle γ" correspondant au double de la valeur du premier angle α,
dans lequel l'élément de pied (39) comporte une saillie (35), la saillie (35) comportant un bord supérieur (37) et une surface de contact plane (36) inclinée vers un substrat selon un deuxième angle β, le deuxième angle β étant un angle complémentaire par rapport au premier angle α et le bord supérieur (37) de la saillie étant tourné à 90° par rapport au premier axe (A), la surface de contact plane (36) étant une surface chanfreinée.

5. Assemblage (3, 3', 3", 3'") selon l'une des revendications 1 à 4, **caractérisé en ce que** la saillie (35) comprenant deux surfaces de contact planes (38, 38') est inclinée selon un angle β de 45° par rapport à la surface d'appui respective (30, 30', 30", 30‴).

6. Assemblage (3, 3', 3", 3'") selon l'une des revendications 1 à 5, **caractérisé en ce que** l'élément de connexion (3, 3', 3", 3'") comporte deux à quatre surfaces d'appui (30, 30', 30", 30‴).

7. Assemblage (3, 3', 3", 3'") selon l'une des revendications 1 à 6, **caractérisé en ce que** les surfaces d'appui (30, 30', 30", 30'") sont sensiblement de forme carrée.

8. Assemblage (3, 3', 3", 3'") selon la revendication 1, **caractérisé en ce que** l'élément de connexion (3, 3', 3", 3'") comprend quatre surfaces d'appui (30, 30', 30", 30‴), les quatre surfaces d'appui (30, 30', 30", 30'") étant disposées en deux rangées, chacune comprenant deux surfaces d'appui (30, 30', 30", 30‴), quatre saillies (35) étant disposées en forme de croix entre les quatre surfaces d'appui (30, 30', 30", 30‴).

9. Assemblage (1) selon l'une des revendications 1 à 8, **caractérisé en ce que** les surfaces chanfreinées (21, 21', 21", 21'"; 22, 22', 22", 22‴) sont inclinées selon un angle α d'environ 45° par rapport au plan du panneau modulaire (M).

10. Assemblage (1) selon l'une des revendications 1 à 9, **caractérisé en ce que** les panneaux modulaires (2) comprennent quatre coins (10, 10', 10", 10'") et sont de préférence de forme rectangulaire ou carrée.

11. Assemblage (1) selon l'une des revendications 1 à 10, **caractérisé en ce que** les panneaux modulaires (2) comprennent aux angles des évidements (18, 18', 18", 18'") destinés à recevoir des côtés sur les surfaces d'appui (30, 30', 30", 30'") des éléments de connexion (3, 3', 3", 3'"), la forme de base des évidements correspondant sensiblement aux surfaces d'appui (30, 30', 30", 30'") des éléments de connexion (3, 3', 3", 3'").

12. Système modulaire de construction de meubles comprenant un assemblage (1) selon l'une des revendications 1 à 11.
